# EUROPÄISCHE PATENTANMELDUNG

(11) **EP 2 708 118 A2**
(43) Veröffentlichungstag der Anmeldung: **19.03.2014**
(21) Anmeldenummer: 13004555.2
(22) Anmeldetag: 17.09.2013
(51) Int. Cl.: A01K 1/06

(54) **Fang- und Behandlungsstand**

(30) Priorität: 18.09.2012 DE 202012008976 U
(71) Anmelder: PATURA KG, 63925 Laudenbach (DE)
(72) Erfinder: Allié, Bernd, 63897 Miltenberg (DE)
(74) Vertreter: Herrmann, Uwe

(57) **Zusammenfassung**

Die Erfindung betrifft einen Fang- und Behandlungsstand, insbesondere für Rinder, mit wenigstens zwei gegenüberliegenden Seitenwänden, deren Abstand zueinander veränderbar ist, wobei wenigstens ein Antriebsmittel vorgesehen ist, das mit einer oder beiden Seitenwänden derart in Verbindung steht, dass die Seitenwand bzw. die Seitenwände durch den Betrieb der Antriebsmittel derart bewegt wird/werden, dass sich der Abstand der Seitenwände zueinander ändert.

## Beschreibung

Die vorliegende Erfindung betrifft einen Fang- und Behandlungsstand insbesondere für Rinder mit wenigstens zwei gegenüberliegenden Seitenwänden, deren Abstand zueinander veränderbar ist.

Aus dem Stand der Technik sind Fang- und Behandlungsstände unter anderem für Rinder bekannt, bei denen mittels vergleichsweise schwerer, mechanischer Teile per Hand eine Verringerung des Abstandes der beiden Seitenwände des Standes, das heißt eine Seitenverengung durchgeführt wird. Die Bewegung dieser Teile bzw. der Vorgang der Seitenverengung ist üblicherweise sehr geräuschintensiv, was bei den Tieren zu einer Stressreaktion führen kann. Zudem sind bekannte Seitenverengungen vergleichsweise umständlich und mit relativ hohem Kraftaufwand zu betätigen, so dass nach längerer Zeit der Bedienung Ermüdungserscheinungen auftreten können.

Fang- und Behandlungsstände werden benötigt, um Pferde und insbesondere Nutztiere, wie Rinder zu fangen und zu fixieren, beispielsweise für Untersuchungszwecke, für Kennzeichnungszwecke, etc.

Der vorliegenden Erfindung liegt die Aufgabe zugrunde, einen Fang- und Behandlungsstand der eingangs genannten Art dahingehend weiterzubilden, dass eine Seitenverengung, das heißt die Verringerung des Abstandes der beiden Seitenwandungen möglichst ohne großen Kraftaufwand und möglichst geräuscharm erfolgen kann.

Diese Aufgabe wird durch einen Fang- und Behandlungsstand mit den Merkmalen des Anspruchs 1 gelöst. Danach ist vorgesehen, dass wenigstens ein Antriebsmittel vorgesehen ist, das mit einer oder beiden Seitenwänden des Fang- und Behandlungsstandes derart in Verbindung steht, dass die Seitenwand bzw. die Seitenwände durch den Betrieb der Antriebsmittel derart bewegt wird/werden, dass sich deren Abstand zueinander ändert. Erfindungsgemäß ist somit wenigstens ein Antriebsmittel vorgesehen, durch das eine Änderung des Abstandes der beiden Seitenwände, vorzugsweise eine Verringerung des Seitenwandabstandes, das heißt eine Seitenverengung möglich ist.

An dieser Stelle wird darauf hingewiesen, dass der Begriff "Seitenwand" weit auszulegen ist und jede beliebige seitliche Begrenzung des Fang- und Behandlungsstandes, wie Gitter, Stäbe, massive Wandelemente etc. umfasst.

Das Antriebsmittel kann wenigstens eine hydraulische, pneumatische oder motorische Antriebseinheit aufweisen. So ist es möglich, die Seitenverengung bzw. die Änderung des Abstandes der Seitenwände mit Hilfe hydraulischer, pneumatischer oder motorischer Kräfte vorzunehmen. Dies bedeutet eine Arbeitserleichterung gegenüber bekannten Fang- und Behandlungsständen und erlaubt zudem eine geräuschlose und somit für die Tiere stressfreie Verengung der Seitenwände. Auf schwere, mechanische Teile, die üblicherweise sehr geräuschintensiv sind, kann verzichtet werden.

Denkbar ist es, dass das Antriebsmittel und insbesondere die Antriebseinheit händisch betätigbar ist. In Betracht kommt beispielsweise eine leichtgängige Hydraulik-Handpumpe, die einen nur sehr geringen Kraftaufwand benötigt und dadurch über viele Stunden ein weitgehend ermüdungsfreies Arbeiten erlaubt. Grundsätzlich sind auch andere Antriebsquellen als das händische Betätigen denkbar, wie beispielsweise eine Hydraulikpumpe, ein Elektromotor, ein Verdichter, etc. Besonders vorteilhaft ist es jedoch, wenn auf eine externe Energieversorgung, wie beispielsweise eine Stromquelle verzichtet werden kann und die erforderlichen Kräfte, wie z. B. hydraulische Kräfte zur Seitenwandverstellung per Hand aufgebracht und dann anderweitig, z.B. hydraulisch weitergeleitet werden können.

Es erfolgt somit vorzugsweise eine Umwandlung der die nutzerseitige Betätigung aufgebrachten Energie in eine andere Energieform, beispielsweise in hydraulische Energie.

In einer bevorzugten Ausgestaltung der Erfindung ist vorgesehen, dass das Antriebsmittel derart ausgestaltet ist, dass im Betrieb des Antriebsmittels beide Seitenwände gleichzeitig bewegt werden. So ist es beispielsweise denkbar, dass nach dem Einfangen des Tieres durch Betätigung des Antriebsmittels bzw. der Antriebseinheit beide Seitenwände gleichzeitig aufeinander zu bewegt werden, bis der gewünschte Abstand erreicht ist. Dieser ist vorzugsweise derart bemessen, dass sich das Tier, auch Jungtiere, in dem Fang- und Behandlungsstand nicht mehr umdrehen kann.

Besonders vorteilhaft ist es, wenn das Antriebsmittel derart ausgeführt ist, dass die wenigstens eine Seitenwand, vorzugsweise beide Seitenwände stufenlos verstellbar sind. So ist es möglich, eine optimale Anpassung des Abstandes der Seitenwände an die Breite der Tiere bzw. an deren Größe vorzunehmen.

In weiterer Ausgestaltung der Erfindung ist vorgesehen, dass das Antriebsmittel ein oder mehrere Seile, vorzugsweise Drahtseile, zur Kraftübertragung umfasst, die sich zwischen einem der Teil des Antriebsmittels und der oder den Seitenwänden erstrecken. Das oder die Seile können über wenigstens eine, vorzugsweise über mehrere Umlenkrolle laufen.

In weiterer Ausgestaltung der Erfindung weist das Antriebsmittel wenigstens eine Kolben-Zylinder-Einheit auf, die mit wenigstens einem ersten Seil in Verbindung steht. Diese Kolben-Zylinder-Einheit kann sich beispielsweise in der Mitte des oben liegenden Rahmens des Standes befinden und beispielsweise über eine Hydraulik-oder Pneumatikleitung bzw. ein darin befindliches Fluid mit der vorzugsweise händisch betätigten Pumpe in Verbindung stehen. Wird diese Pumpe oder eine andere Antriebseinheit betätigt, wird der Kolben je nach Verschaltung ein oder ausgefahren.

Bei der Pumpe kann es sich beispielsweise um eine Doppelhubpumpe handeln, d.h. um eine Pumpe, die sowohl beim Vorhub als auch beim Rückhub eine Pumpwirkung entfaltet.

Das genannte wenigstens eine erste Seil kann sich von der genannten Kolben-Zylinder-Einheit zu einer ersten Umlenkrolle erstrecken, die vorzugsweise ortsfest an einem Rahmen angeordnet ist.

Des weiteren kann vorgesehen sein, dass wenigstens zwei zweite Seile vorgesehen sind, die mit dem ersten Seil in Verbindung stehen und von denen jedes vorzugsweise über wenigstens eine zweite Umlenkrolle zu einer Seitenwand geführt ist. Bei Betätigung der Kolben-Zylinder-Einheit kommt es somit zu einer Bewegung des ersten Seils und damit auch zu jeweils einer Bewegung der zwei zweiten Seile. Diese Bewegung der zwei zweiten Seile wird auf die beiden Seitenwände übertragen und zwar vorzugsweise so, dass die beiden Seitenwände beim Ausfahren des Kolbens der Kolben-Zylinder-Einheit aufeinander zu bewegt werden, d. h. eine Seitenverengung durchgeführt wird.

In weiterer Ausgestaltung der Erfindung sind die ersten und/oder zweiten Umlenkrollen an einem Rahmen und vorzugsweise oben an dem Rahmen des Fang- und Behandlungsstandes angeordnet, der sich vorzugsweise im oberen Bereich des Fang- und Behandlungsstandes befindet und vorzugsweise dessen obere Abdeckung bildet. An diesem Rahmen verlaufen vorzugsweise die genannten Seile.

Die ersten und/oder die zweiten Umlenkrollen sind vorzugsweise mittig zwischen den Seitenwänden angeordnet.

Die beiden zweiten Seile werden wie ausgeführt vorzugsweise zu einem ersten Seil (Hauptseil) zusammengeführt bzw. verknüpft. Grundsätzlich ist es auch denkbar, die zweiten Seile getrennt zu lassen und beispielsweise alle zweiten Seile mit der Kolben-Zylinder-Einheit zu verbinden.

In weiterer Ausgestaltung der Erfindung ist vorgesehen, dass wenigstens zwei erste Umlenkrollen und wenigstens zwei erste Seile vorgesehen sind, wobei die Seile mit der Kolben-Zylinder-Einheit oder einer sonstigen Antriebseinheit in Verbindung stehen. Denkbar ist es, dass sich das eine erste Seil von einer ersten Umlenkrolle in Richtung des vorderen Bereichs des Fang- und Behandlungsstandes und das andere erste Seil von einer anderen ersten Umlenkrolle in Richtung des hinteren Bereichs des Fang- und Behandlungsstandes erstreckt.

Dabei ist es denkbar, dass sowohl in dem vorderen als auch in dem hinteren Bereich des Fang- und Behandlungsstandes jeweils wenigstens zwei zweite Umlenkrollen angeordnet sind, über die je ein zweites Seil zu je einer Seitenwand geführt ist. Vorzugsweise steht somit jede Seitenwand mit je wenigstens zwei zweiten Seilen in Verbindung.

In weiterer Ausgestaltung der Erfindung können Mittel zur Druckverminderung in dem Antriebsmittel und/oder in dem damit in Verbindung stehenden Leitungssystem vorhanden sein. Eine oder beide der Seitenwände können derart angeordnet sein, dass sie nach der Druckverminderung durch ihr Eigengewicht oder durch ein anderes Bewegungsmittel, wie z.B. Federn, auseinander bewegt werden. So ist es möglich, einfach und geräuscharm ein Zurückfahren der wenigstens einen Seitenwand zu bewerkstelligen. Durch Öffnen beispielsweise des Hydraulikkreislaufes mittels einer Ablassschraube z. B. an der Handpumpe und Einwirken des Eigengewichts der Wände kann ein Zurückfahren der wenigstens einen bewegten bzw. bewegbaren Seitenwand einfach und geräuscharm erfolgen.

Denkbar ist es, dass der Abstand der Seitenwände voneinander von einem Bereich von 75 cm bis 90 cm bis zu einem Bereich von 55 cm bis 25 cm veränderbar ist. Vorzugsweise findet eine Seitenwandverengung, das heißt eine Verringerung des Abstandes der beiden Seitenwände von 85 cm auf 40 cm Durchgangsbreite statt.

Denkbar ist es, dass die Kolben-Zylinder-Einheit in einem mittleren Abschnitt zwischen dem vorderen und dem hinteren Bereich des Fang- und Behandlungsstandes angeordnet ist und beispielsweise einen Hub von 250 mm aufweist, so dass eine Verengung bzw. eine Verschiebung beider Seiten um je 22,5 cm möglich ist. Der Betrieb ist wie ausgeführt über eine einfach zu bedienende Handpumpe denkbar, deren Förderleistung um beispielsweise 45 cm³ je Doppelhub betragen kann. Denkbar ist es beispielsweise, dass etwa 6 Doppelhübe notwendig sind, um die beiden Seitenwände um jeweils 22,5 cm zu verengen, beispielsweise von einem Abstand von 85 cm auf 40 cm.

In dem erfindungsgemäßen Fang- und Behandlungsstand können alle Tiere einer Herde, vom Jungtier bis zum Zuchtbullen und insbesondere Rinder aller Altersklassen und Rassen fixiert und behandelt werden. Vorzugsweise sind darüber hinaus auch Mittel zur Klauenpflege in dem Fang- und Behandlungsstand vorhanden.

Vorzugsweise ist vorgesehen, dass die Seitenverengung so möglich ist, dass sich auch Jungtiere im Stand nicht umdrehen können, wodurch gefährliche Situationen vermieden werden.

Weitere Einzelheiten und Vorteile der Erfindung werden anhand eines in der Zeichnung dargestellten Ausführungsbeispiels näher erläutert. Es zeigen:
- Figur 1:: eine Draufsicht auf den Fang- und Behandlungsstand mit dort angeordneter Seilführung zur Seitenverengung,
- Figur 2:: eine perspektivische Ansicht der Handpumpe und
- Figur 3:: eine perspektivische Ansicht einer Anordnung zur Klauenpflege.

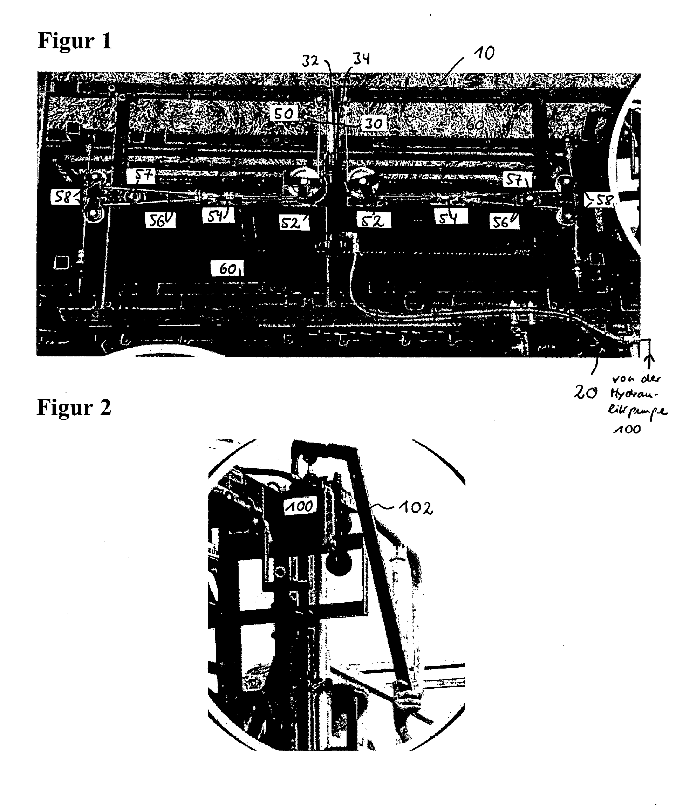

In Figur 1 ist mit dem Bezugszeichen 10 ein erfindungsgemäßer Fang- und Behandlungsstand in der Draufsicht gezeigt. Der Fang- und Behandlungsstand gemäß der Erfindung kann beispielsweise in Modulbauweise ausgeführt sein. Denkbar ist es, dass die Bedienseite rechts oder links freiwählbar ist.

Der Fang- und Behandlungsstand 10 kann aus einem soliden Grundrahmen aus Metall bestehen, an den Seitenwände, eine hintere und eine vordere Begrenzung montiert werden, die ebenfalls aus Metall bestehen können. Der Boden kann durch ein Blech oder dergleichen gebildet werden. Durch die Modulbauweise ist es möglich, eine Anpassung an die betrieblichen Anforderungen vorzunehmen. Anstelle von Metall ist auch jeder andere geeignete Werkstoff denkbar.

Das Seitenteil bzw. die Seitenwandungen können geschlossen ausgeführt sein oder Türen bzw. abnehmbare Elemente aufweisen, so dass das Tier vorzugsweise von beiden Seiten gut zugänglich ist. Die Rückseite des Fang- und Behandlungsstandes kann durch eine Tür, vorzugsweise durch eine Schiebetür verschlossen werden und die Frontseite durch einen Halsfangrahmen und/oder durch einen Fangkorb.

Die nutzbare Innenlänge des Standes kann im Bereich von > 2,5 m und vorzugsweise im Bereich von ca. 2,8 m (besonders bevorzugt 2,78 m) liegen. Dies ermöglicht eine Trennung der Arbeitsschritte "Einlass" und "Fixierung". Der Halsfangrahmen kann ebenfalls verstellbar sein, z. B. im Bereich von 10 bis 90 cm, vorzugsweise im Bereich von 12 bis 85 cm.

Der gesamte Fang- und Behandlungsstand kann transportierbar sein. Denkbar ist der Einsatz von Rechteckrohren zur Aufnahme einer Palettengabel für einen Stapler oder einen Traktor. Auch ist es denkbar, ein Einachsfahrwerk mit Kugelkopfkupplung vorzusehen bzw. eine Vorrichtung zum Transport mit einem DreipunktKraftheber eines Traktors.

Wie bereits oben ausgeführt, besteht ein wesentlicher Aspekt des erfindungsgemäßen Fang- und Behandlungsstandes darin, dass der Abstand der Seitenwände zueinander veränderbar ist. So ist es denkbar, die Seitenwände beispielsweise von 85 cm stufenlos bis hin zu einem Abstand von 40 cm oder auch jedem Maß zwischen 85 cm und 40 cm zusammenzufahren.

Die Seitenverengung, das heißt die Verringerung des Abstandes der beiden Seitenwände erfolgt in dem hier dargestellten Ausführungsbeispiel hydraulisch. Dazu ist die in Figur 2 dargestellte Hydraulikpumpe 100 vorgesehen, die händisch mittels des Hebels 102 betätigt werden kann. Durch diese Handpumpe 100 wird Hydraulikmedium durch die dargestellte Leitung 20 in den Zylinderraum einer Kolben-Zylinder-Einheit 30 gepumpt. Dies führt dazu, dass der in Figur 1 dargestellte Kolben 32 aus dem Zylinder 34 ausgefahren wird.

Wie dies aus Figur 1 weiter ersichtlich ist, befindet sich im Endbereich des Kolbens 32 ein Befestigungselement, wie z.B. Schrauben oder dergleichen zum Fixieren der beiden ersten Kabel 50. Diese beiden ersten Kabel 50 laufen über erste Umlenkrollen 52, die sich in etwa einem mittleren Bereich sowohl in Seitenrichtung als auch in Längenrichtung des Fang- und Behandlungsstandes befinden. Die beiden ersten Seile 50 enden in einem Verbindungselement 54, von dem aus sich jeweils zwei zweite Seile 56 über jeweils zwei Umlenkrollen 58 zu den beiden Seitenwänden 60 des Fang- und Behandlungsstandes erstrecken.

Die Rollen 52 und 58 sind vorzugsweise oben und vorzugsweise im Hinblick auf die seitliche Erstreckung und/oder im Hinblick auf die Erstreckung in Längsrichtung auf dem Rahmen angeordnet, der die Oberseite des Standes bildet.

Zwischen dem Verbindungselement 54 und den Seilrollen 58 erstreckt sich je eine Führungsrolle 57.

So ist je eine zweite Umlenkrolle 58 für je ein zweites Seil vorgesehen, wie dies aus Figur 1 hervorgeht. Diese Anordnung umfassend das erste Seil 50, die erste Umlenkrolle 52, das Verbindungselement 54, zwei zweite Seile 56, die Führungsrolle 57 und zwei zweite Umlenkrollen 58 ist doppelt angeordnet und zwar spiegelsymmetrisch relativ zu einer Querebene des Fang- und Behandlungsstandes. Somit erstreckt sich ein erstes Seil bzw. damit verbundene zweite Seile in den hinteren Bereich und ein erstes Seil bzw. damit verbundene zweite Seile in den vorderen Bereich des Behandlungsstandes, wie dies aus Figur 1 hervorgeht.

Wird nun aufgrund der durch das Hydraulikmedium übertragenen Betätigungskraft der Kolben 32 ausgefahren, werden die beiden ersten Seile 50 bzw. deren Endpunkte, die am Kolben 32 befestigt sind gemäß Figur 1 nach oben bewegt und die zwei zweiten Seile 56 jeweils zur Mitte des Behandlungsstandes hin, das heißt weg von dem vorderen und hinteren Endbereich des Fang- und Behandlungsstandes. Diese Seilbewegung führt dazu, dass die beiden Seitenwände 60 des Fang- und Behandlungsstandes aufeinander zu bewegt werden.

Es erfolgt somit eine weitgehend geräuschlose und damit für die Tiere stressfreie Verengung der Seitenwände. Die in Figur 2 dargestellte Hydraulik-Handpumpe, mit der ein Hydraulikfluid zu der Kolben-Zylinder-Einheit 30 gefördert wird, ist leichtgängig und erfordert nur einen sehr geringen Kraftaufwand.

Soll der Abstand der beiden Seitenwände 60 nach der Behandlung des Tieres wieder vergrößert werden, kann durch ein Öffnen des Hydraulikkreislaufes mittels einer Ablassschraube an der Handpumpe 100 oder an sonstiger Stelle der Druck im Hydraulikkreislauf verringert werden. Dies führt dazu, dass der Kolben 32 wieder in den Zylinder 34 eingefahren werden kann und zwar durch das Eigengewicht der sich nach außen bewegenden Wände 60.

Die vorzugsweise geräusch- und stufenlose Seitenverengung führt zu einer stressarmen Behandlung der Tiere. Die beiden Seitenwände des Fang- und Behandlungsstandes sind vorzugsweise parallel zueinander verschiebbar, das heißt es ist eine parallele Verengung der Wände möglich. Darüber hinaus ist ein weitgehend lautloses, steuerbares Auseinanderfahren der Wände durch Ablassen des Druckes am Ablasshahn möglich. Je nach Geschwindigkeit des Druckabfalls kann ein vergleichsweise langsames Auseinanderfahren der Wände erfolgen bzw. es kann eine dämpfende Wirkung eintreten.

Die beiden Seitenwände können, müssen jedoch nicht parallel zueinander angeordnet sein. Sie können auch schräg zueinander verlaufen.

Wie bereits oben ausgeführt, kann sich im vorderen Teil des Fang- und Behandlungsstandes ein Halsfangrahmen befinden. Dieser kann komplett blechverkleidet sein. Er verhindert das Durchtreten der Tiere und verringert die Verletzungsgefahr.

Der Boden des Fang- und Behandlungsstandes kann aus Streckmetallblech bestehen. Dies ergibt eine hohe Trittsicherheit für die Tiere und weist den Vorteil einer geringen Schmutzanfälligkeit auf. Auch ein anderes Material als Blech kann für den Boden des Standes verwendet werden.

Der Fang- und Behandlungsstand ist eine in sich stabile Anordnung, die auf einer Weide oder dergleichen abgestellt werden kann. Die äußere Erscheinungsform ist vorzugsweise im Wesentlichen die eines Quaders.

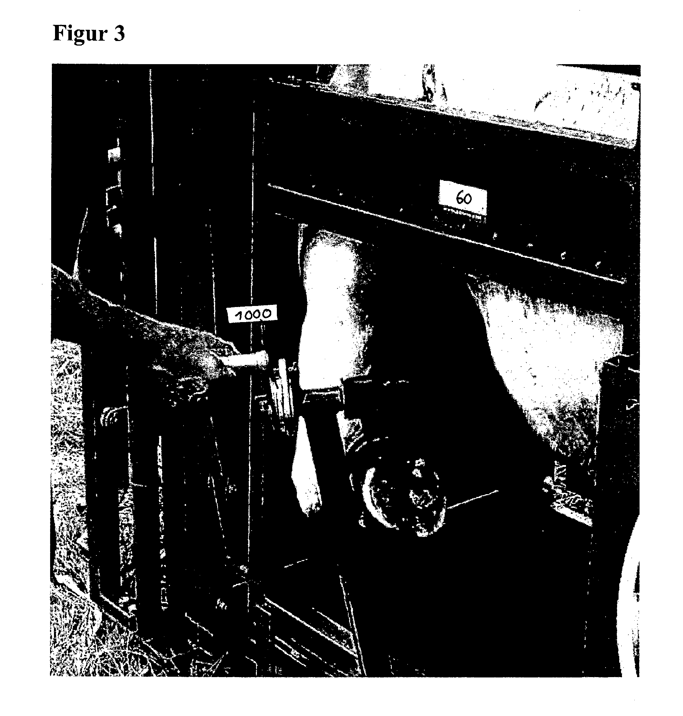

Wie dies aus Figur 3 hervorgeht, können als weitere Bestandteile des Fang- und Behandlungsstandes eine oder mehrere Mittel zur Klauenpflege vorgesehen sein. Diese Mittel können beispielsweise eine oder mehrere Vorderfußwinden, Hinterfußwinden und Bauchgurtwinden umfassen. Durch die Vorderfußwinde sowie durch die Hintergußwinde ist es möglich, eine für den Nutzer angenehme Position zur Klauenbehandlung vorzusehen. Durch die Bauchgurtwinde ist es möglich, das Tier insgesamt abzustützen, sofern dies im Rahmen der Behandlung erforderlich ist. Vorzugsweise ist wenigstens eine, und besonders bevorzugt sämtliche der genannten Winden rückschlagfrei.

Figur 3 zeigt einen Fall, in dem eine vordere Klaue mittels einer handbetätigten Vorderfußwinde angehoben ist und somit zur Behandlung zur Verfügung steht. Die Vorderfußwinde ist in dieser Figur mit dem Bezugszeichen 1000 gekennzeichnet. Sie kann an oder im Bereich der Seitenwandung 60 angeordnet sein.

Durch die erfindungsgemäße Seitenverengung kann vorzugsweise die gesamte Herde vom Jungtier bis zum Zuchtbullen in einem Stand behandelt werden.

## Patentansprüche

1. Fang- und Behandlungsstand, insbesondere für Rinder, mit wenigstens zwei gegenüberliegenden Seitenwänden, deren Abstand zueinander veränderbar ist, **dadurch gekennzeichnet, dass** wenigstens ein Antriebsmittel vorgesehen ist, das mit einer oder beiden Seitenwänden derart in Verbindung steht, dass die Seitenwand bzw. die Seitenwände durch den Betrieb der Antriebsmittel derart bewegt wird/werden, dass sich der Abstand der Seitenwände zueinander ändert.

2. Fang- und Behandlungsstand nach Anspruch 1, **dadurch gekennzeichnet, dass** das Antriebsmittel wenigstens eine hydraulische, pneumatische oder motorische Antriebseinheit aufweist.

3. Fang- und Behandlungsstand nach Anspruch 1 oder 2, **dadurch gekennzeichnet, dass** das Antriebsmittel und insbesondere die Antriebseinheit händisch betätigbar ist.

4. Fang- und Behandlungsstand nach einem der vorhergehenden Ansprüche, **dadurch gekennzeichnet, dass** das Antriebsmittel derart ausgestaltet ist, dass im Betrieb des Antriebsmittels beide Seitenwände gleichzeitig bewegt werden.

5. Fang- und Behandlungsstand nach einem der vorhergehenden Ansprüche, **dadurch gekennzeichnet, dass** das Antriebsmittel derart ausgeführt ist, dass die wenigstens eine Seitenwand, vorzugsweise beide Seitenwände stufenlos verstellbar sind.

6. Fang- und Behandlungsstand nach einem der vorhergehenden Ansprüche, **dadurch gekennzeichnet, dass** das Antriebsmittel ein oder mehrere Seile zur Kraftübertragung umfasst, die sich zwischen einem Bestandteil der Antriebsmittel und der oder den Seitenwänden erstrecken.

7. Fang- und Behandlungsstand nach Anspruch 6, **dadurch gekennzeichnet, dass** das oder die Seile über wenigstens eine Umlenkrolle laufen.

8. Fang- und Behandlungsstand nach Anspruch 6 oder 7, **dadurch gekennzeichnet, dass** wenigstens eine Kolben-Zylinder-Einheit vorgesehen ist, die mit wenigstens einem ersten Seil in Verbindung steht.

9. Fang- und Behandlungsstand nach Anspruch 8, **dadurch gekennzeichnet, dass** das wenigstens eine erste Seil von der Kolben-Zylinder-Einheit zu einer ersten Umlenkrolle geführt ist, die vorzugsweise ortsfest an einem Rahmen angeordnet ist, und dass des weiteren wenigstens zwei zweite Seile vorgesehen sind, die mit dem ersten Seil in Verbindung stehen und von denen jedes vorzugsweise über jeweils wenigstens eine zweite Umlenkrolle zu jeweils einer Seitenwand führt.

10. Fang- und Behandlungsstand nach Anspruch 9, **dadurch gekennzeichnet, dass** die ersten und zweiten Umlenkrollen an einem Rahmen bzw. Gestell des Fang- und Behandlungsstandes angeordnet sind, der sich vorzugsweise im oberen Bereich des Fang- und Behandlungsstandes befindet.

11. Fang- und Behandlungsstand nach einem der Ansprüche 6 bis 10, **dadurch gekennzeichnet, dass** wenigstens zwei erste Umlenkrollen und wenigstens zwei erste Seile vorgesehen sind, wobei sich das eine erste Seil von einer ersten Umlenkrolle in Richtung des vorderen Bereichs des Fang- und Behandlungsstandes und das andere erste Seil von einer anderen ersten Umlenkrolle in Richtung des hinteren Bereichs des Fang- und Behandlungsstandes erstreckt.

12. Fang- und Behandlungsstand nach Anspruch 11, **dadurch gekennzeichnet, dass** sowohl in dem vorderen als auch in dem hinteren Bereich des Fang- und Behandlungsstandes jeweils wenigstens zwei zweite Umlenkrollen angeordnet sind, von denen sich je ein zweites Seil zu je einer Seitenwand erstreckt.

13. Fang- und Behandlungsstand nach einem der Ansprüche 2 bis 12, **dadurch gekennzeichnet, dass** Mittel zur Druckverminderung in dem Antriebsmittel und/oder in dem damit in Verbindung stehenden Leitungssystem vorhanden sind und dass eine oder beide der Seitenwände derart angeordnet sind, dass sie nach der Druckverminderung durch ihr Eigengewicht oder durch ein anderes Bewegungsmittel, wie z.B. Federn auseinander bewegt werden.

14. Fang- und Behandlungsstand nach einem der vorhergehenden Ansprüche, **dadurch gekennzeichnet, dass** der Abstand der Seitenwände voneinander von einem Bereich von 75 cm bis 90 cm bis zu einem Bereich von 55 cm bis 25 cm veränderbar ist und vorzugsweise von 85 cm auf 40 cm verringerbar ist.
